# EUROPEAN PATENT SPECIFICATION

(11) **EP 3 912 450 B1**
(45) Date of publication and mention of the grant of the patent: **07.01.2026**
(21) Application number: 18929820.1
(22) Date of filing: 21.08.2018
(51) Int. Cl.: A01D 34/13, A01D 34/14, A01D 34/18

(54) **PAIRED AND SWITCHABLE CUTTING BLADE FOR HARVESTER BLADE PROTECTOR**
GEPAARTE UND AUSTAUSCHBARE SCHNEIDKLINGE FÜR ERNTEMASCHINENKLINGENSCHUTZ
LAME DE COUPE APPARIÉE ET COMMUTABLE DESTINÉE À UN PROTECTEUR DE LAME DE MOISSONNEUSE

(30) Priority: 08.08.2018 CN 201810893050
(43) Date of publication of application: 24.11.2021
(73) Proprietor: Ye, Kongmeng, Dongguan, Guangdong 523000 (CN)
(72) Inventor: Ye, Kongmeng, Dongguan, Guangdong 523000 (CN)
(74) Representative: Verhees, Godefridus Josephus Maria
(86) International application number: PCT/CN2018/101607
(87) International publication number: WO 2020/029323

(56) References cited:
- CA-A1- 2 937 639
- CH-A- 174 923
- CN-A- 105 638 076
- CN-A- 105 638 076
- CN-A- 106 664 958
- CN-U- 205 320 589
- CN-Y- 2 779 836
- DE-A1- 19 734 337
- US-A- 2 931 159
- US-A- 4 223 514
- US-A- 4 750 321

## Description

### TECHNICAL FIELD

The present invention relates to a cutting blade technology for a harvester, more particularly to a switchable cutting blade paired with a harvester knife guard.

### BACKGROUND ART

A switchable cutting blade paired with a harvester knife guard according to the preamble of appended claim 1 is known from CN105638076A. In this known device the cutting blade component of the switchable cutting blade assembly and the cutting blade bottom frame of the knife guard form an integral part.

A harvesting knife guard for a harvester may have a single claw, double claws, three claws or other shapes, and their task is to function as cutting pieces to harvest vegetation and the like. The harvesting knife guard has the operation principle that the cutting blade is in balancing contact with the surface of the knife guard, and the cutting blade moves left and right by a rocker arm to complete the cutting task.

After a period of friction between the cutting blade and a surface part of the knife guard during the operation, the cutting blade and the knife guard are subject to wear, and to a certain degree of wear will affect the cutting task. In this way, it is necessary to replace with a new cutting blade and a new knife guard. Only one piece of cutting blade needs to be replaced, but the knife guard is an entire casting. The entire set of casting must be discarded and replaced with a new knife guard just owing to a certain degree of wear on the surface, which not only wastes a lot of resources, but also takes time to perform the replacement assembly work.

### SUMMARY OF THE INVENTION

For this purpose, a main object of the present invention is to provide a switchable cutting blade paired with a harvester knife guard.

The technical solution adopted in the present invention is as follows: the present invention provides a switchable cutting blade paired with a harvester knife guard, the switchable cutting blade assembly and the cutting blade bottom frames are separate parts, wherein when assembled the groove of the mounting part of the cutting blade component of the switchable cutting blade assembly is fixed on the groove frame of the corresponding cutting blade bottom frame, and wherein the mounting parts of the cutting blade components are provided with notches, so that waste blockage can be cleaned automatically.

Further, each mounting part comprises a mounting face C and through holes formed in the mounting face C; the through holes are fixed with the cutting bucket steel plate by screws or bolts, and a plurality of notches which is uniformly arranged is formed in one end of the mounting face C close to the grooves.

Further, each trough groove and the corresponding cutting bucket steel plate are fixed by screws or by welding.

Further, each blade part is of a V-shaped structure which consists of two triangular cutting blades.

Further, inclined teeth are arranged on the side surface of each triangular cutting blade and form the blade part.

Further, protection plates are arranged on both sides of the cutting bucket steel plate respectively.

Further, each mounting face C and the corresponding blade part are located on the same horizontal surface.

Further, each crossbar is fixed by welding in a manner of attaching a connecting face between the corresponding groove frame and the corresponding triangular part A, or is formed by integral casting.

Further, a gap is formed in the middle of each groove.

Further, each notch is provided with an opening facing one end of the groove.

The switchable cutting blade disclosed by the present invention has the main advantages that the mounting face C and the new knife guard can be directly fixed at the cutting bucket steel plate together by screws.

### BRIEF DESCRIPTION OF THE DRAWINGS

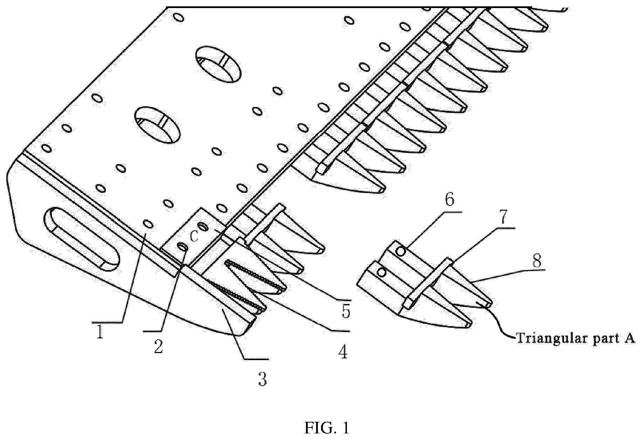

FIG. 1 and FIG. 5 are partially structural schematic diagrams of the present invention;

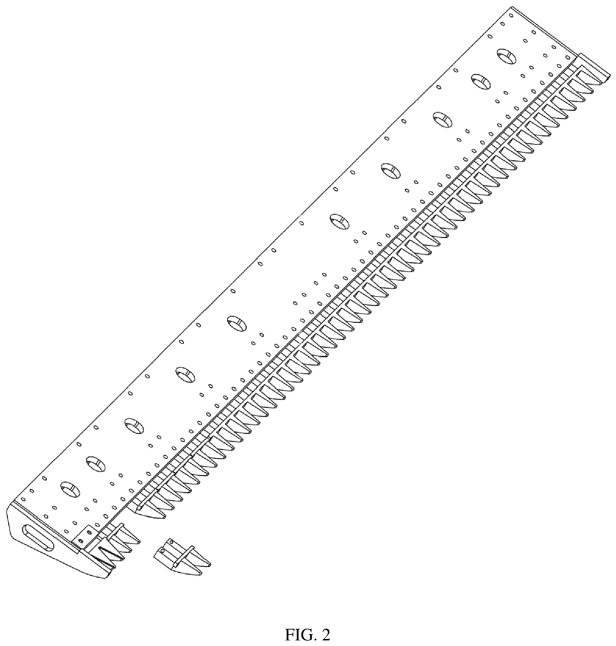

FIG. 2 is a structural schematic diagram of the present invention;

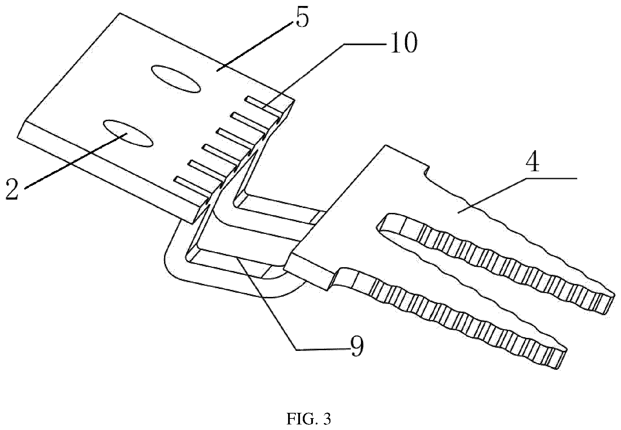

FIG. 3 is a structural schematic diagram of a cutting blade component in the present invention;
FIG. 4 is a structural schematic diagram after a cutting blade is assembled in the present invention; and
FIG. 6 is a structural schematic diagram of an alternative structure of a mounting part provided in the present invention.

### DETAILED DESCRIPTION

The present invention will be described in detail below with reference to the accompanying drawings and specific embodiments. Here, the exemplary embodiments and descriptions of the present invention are used to explain the present invention, but are not intended to limit the present invention.

The present invention provides a switchable cutting blade paired with a harvester knife guard. The switchable cutting blade comprises a switchable cutting blade assembly in which a knife guard is not included and which is provided with notches, so that waste blockage can be cleaned automatically.

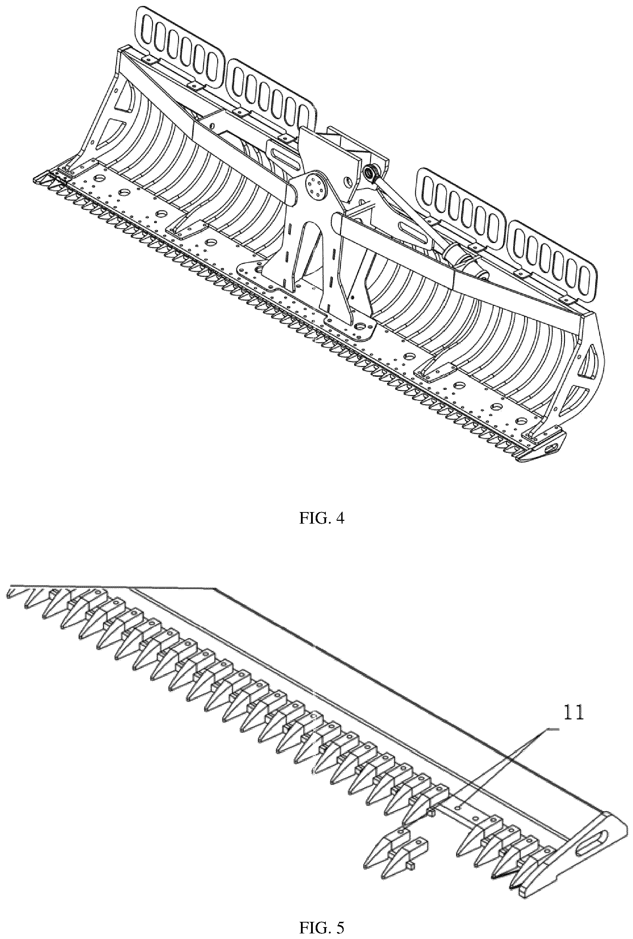

The switchable cutting blade assembly comprises a cutting bucket steel plate 1 and a plurality of cutting blade bottom frames which is arranged on the cutting bucket steel plate and is closely connected. Each cutting blade bottom frame comprises a triangular part A 8 and a groove frame 6 which is integrated with the triangular part A 8. The groove frames 6 and the cutting bucket steel plate 1 are fixed by welding, or referring to FIG. 5, fixed by screws via tapping holes 11. Each groove frame 6 and the corresponding cutting blade bottom frame 1 form an ┘ shape. Each two adjacent cutting blade bottom frames are fixed by a crossbar 7. The crossbar 7 is fixed by welding in a manner of attaching a connecting face between the groove frame 6 and the triangular part A 8. In the present invention, the fixing manner between the cutting bottom frames and the groove frames 6 is not limited to the above-mentioned form, and the groove frames and the cutting blade bottom frames may also be formed by integral casting, both of which fall within the protection scope of the present invention. Each cutting blade bottom frame is provided with a cutting blade component. Each cutting blade component comprises a blade part 4. Each blade part is of a V-shaped structure which consists of two triangular cutting blades. Inclined teeth are arranged on the side surface of each triangular cutting blade and form the blade part. A mounting part is provided at the rear end of the blade part 4, wherein the mounting part comprises a groove 9 which is fixed on the corresponding groove frame 6. Each mounting part comprises a mounting face C 5 and through holes 2 formed in the mounting face C 5. The through holes 2 are fixed together with the cutting bucket steel plate 1 and the cutting blade bottom frames by screws or bolts, and a plurality of notches 10 which is uniformly arranged is formed in one end of the mounting face C 5 close to the grooves 9. Each mounting face C 5 and the corresponding blade part 4 are located on the same horizontal surface. Protection plates 3 are arranged on both sides of the cutting bucket steel plate 1 respectively.

The present invention has the main advantages: each mounting face C and the corresponding cutting blade bottom frame may be directly fixed to the cutting bucket steel plate by screws, and the cutting blade bottom frame is welded to the steel plate, such that the cutting blade bottom frame serves as a knife guard, and there is no need to assemble or disassemble a knife guard for a brand-new cutting bucket. If a blade protector needs to be installed when the cutting blade bottom frames are fixed on the steel plate without welding, the knife guard can also be directly installed with screws.

Meanwhile, according to the present invention, the notches 10 are provided at the mounting face 5, a gap is formed in the middle of each groove 9, and each notch 7 is provided with an opening facing one end of the groove. Conventionally, some slits will appear during the contact between all the knife guard and the blades, and will cause accumulation of debris. When the accumulation reaches a certain level, the blade should be removed and cleaned, otherwise it will affect the cutting task. Now, since the notches 10 are formed on the surface of the mounting face C, those debris will be torn and fall into the notches 10 without causing blockage.

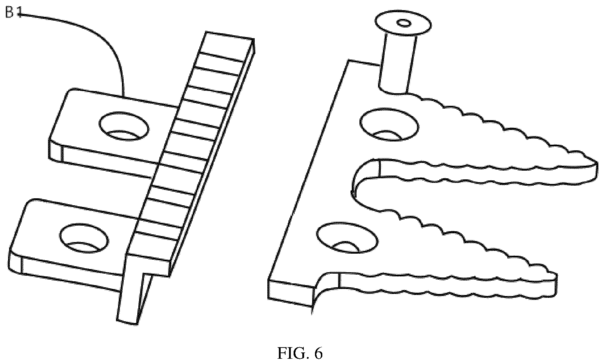

In addition, in the present invention, the mounting parts can be replaced with two parts as shown in FIG. 6. The notches are formed in a surface B1. Owing to the notches on the surface B1, the debris will be torn and fall into the notches without causing blockage.

## Claims

1. A switchable cutting blade paired with a harvester knife guard, comprising:
a switchable cutting blade assembly comprising a cutting bucket steel plate (1) and a plurality of cutting blade components, each cutting blade component comprises a blade part and a mounting part arranged at the rear end of the blade part; each mounting part comprises a groove (9); and
a plurality of cutting blade bottom frames which is arranged on the cutting bucket steel plate (1) and being closely connected; each cutting blade bottom frame comprises a triangular part A (8) and a groove frame (6) which is integrated with the triangular part A (8); each of the groove frames (6) and the corresponding triangular part A (8) of the cutting blade bottom frame form a J-shape; each two adjacent cutting blade bottom frames are fixed by a crossbar (7);
**characterised in that** the switchable cutting blade assembly and the cutting blade bottom frames are separate parts, wherein when assembled the groove (9) of the mounting part of the cutting blade component of the switchable cutting blade assembly is fixed on the groove frame (6) of the corresponding cutting blade bottom frame, and wherein the mounting parts of the cutting blade components are provided with notches (10), so that waste blockage can be cleaned automatically.

2. The switchable cutting blade paired with the harvester knife guard according to claim 1, wherein each mounting part comprises a mounting face C (5) and through holes (2) formed in the mounting face C (5); the through holes (2) are fixed with the cutting bucket steel plate (1) by screws or bolts, and a plurality of notches (10) which is uniformly arranged is formed in one end of the mounting face C (5) close to the grooves (9).

3. The switchable cutting blade paired with the harvester knife guard according to claim 1, wherein each trough groove (9) and the cutting bucket steel plate (1) are fixed by screws or by welding.

4. The switchable cutting blade paired with the harvester knife guard according to claim 1, wherein each blade part is of a V-shaped structure which consists of two triangular cutting blades (4).

5. The switchable cutting blade paired with the harvester knife guard according to claim 3, wherein inclined teeth are arranged on the side surface of each triangular cutting blade (4) and form the blade part.

6. The switchable cutting blade paired with the harvester knife guard according to claim 1, wherein protection plates (3) are arranged on both sides of the cutting bucket steel plate (1) respectively.

7. The switchable cutting blade paired with the harvester knife guard according to claim 1, wherein each mounting face C (5) and the corresponding blade part are located on the same horizontal surface.

8. The switchable cutting blade paired with the harvester knife guard according to claim 1, wherein each crossbar (7) is fixed by welding in a manner of attaching a connecting face between the corresponding groove frame (6) and the corresponding triangular part A (8), or is formed by integral casting.

9. The switchable cutting blade paired with the harvester knife guard according to claim 1, wherein a gap is formed in the middle of each groove (9).

10. The switchable cutting blade paired with the harvester knife guard according to claim 1, wherein each notch (10) is provided with an opening facing one end of the groove (9).

## Patentansprüche

1. Ein umschaltbares Schneidmesser mit zugehörigem Mähdreschermesserschutz, bestehend aus:
einer umschaltbaren Schneidmesserbaugruppe mit einer Stahlplatte (1) für den Schneidbehälter und mehreren Schneidmesserkomponenten, wobei jede Schneidmesserkomponent einen Klingenteil und einen am hinteren Ende des Klingenteils angeordneten Befestigungsteil umfasst, wobei jeder Befestigungsteil eine Nut (9) aufweist, und
mehreren eng aneinanderliegenden Schneidmesser-Unterrahmen, die auf der Stahlplatte (1) für den Schneidbehälter angeordnet sind, wobei jeder Schneidmesser-Unterrahmen aus einem dreieckigen Teil A (8) und einem Nutrahmen (6), der mit dem dreieckigen Teil A (8) verbunden ist, besteht, wobei die Nutrahmen (6) und die zugehörigen dreieckigen Teile A (8) des Schneidmesser-Unterrahmens jeweils eine J-Form bilden, wobei jeweils zwei benachbarte Schneidmesser-Unterrahmen durch eine Querstange (7) verbunden sind,
**gekennzeichnet dadurch, dass** die umschaltbare Schneidmesserbaugruppe und die Schneidmesser-Unterrahmen separate Teile sind, wobei die Nut (9) des Montageteils der Schneidmesserkomponente der umschaltbaren Schneidmesserbaugruppe im montierten Zustand in der Nut (6) des entsprechenden Schneidmesser-Unterrahmens befestigt ist und die Montageteile der Schneidmesserkomponenten mit Kerben (10) versehen sind, um Verstopfungen durch Abfall automatisch zu beseitigen.

2. Das umschaltbare Schneidmesser in Verbindung mit dem Mähdreschermesserschutz nach Anspruch 1, wobei jedes Montageteil eine Montagefläche C (5) und in der Montagefläche C (5) ausgebildete Durchgangslöcher (2) aufweist; die Durchgangslöcher (2) sind mittels Schrauben oder Bolzen mit der Stahlplatte (1) des Schneidbehälters verbunden, und an einem Ende der Montagefläche C (5) nahe den Nuten (9) sind mehrere gleichmäßig angeordnete Kerben (10) ausgebildet.

3. Das umschaltbare Schneidmesser in Verbindung mit dem Mähdreschermesserschutz nach Anspruch 1, wobei jede Rillennut (9) und die Stahlplatte (1) des Schneidbehälters durch Schrauben oder Schweißen befestigt sind.

4. Das umschaltbare Schneidmesser in Verbindung mit dem Mähdreschermesserschutz nach Anspruch 1, wobei jedes Messerteil eine V-förmige Struktur aufweist, die aus zwei dreieckigen Schneidmessern (4) besteht.

5. Das umschaltbare Schneidmesser in Verbindung mit dem Mähdreschermesserschutz nach Anspruch 3, wobei an der Seitenfläche jedes dreieckigen Schneidmessers (4) schräge Zähne angeordnet sind, die den Messerteil bilden.

6. Das umschaltbare Schneidmesser in Verbindung mit dem Mähdreschermesserschutz nach Anspruch 1, wobei Schutzplatten (3) jeweils auf beiden Seiten der Stahlplatte (1) des Schneidbehälters angeordnet sind.

7. Das umschaltbare Schneidmesser in Verbindung mit dem Mähdreschermesserschutz nach Anspruch 1, wobei jede Montagefläche C (5) und das zugehörige Messerteil auf derselben horizontalen Fläche liegen.

8. Das austauschbare Schneidmesser in Verbindung mit dem Erntemesserschutz nach Anspruch 1, wobei jede Querstrebe (7) durch Schweißen so befestigt ist, dass eine Verbindungsfläche zwischen dem entsprechenden Nutrahmen (6) und dem entsprechenden Dreiecksteil A (8) entsteht, oder durch einteiliges Gussverfahren hergestellt ist.

9. Das austauschbare Schneidmesser in Verbindung mit dem Erntemesserschutz nach Anspruch 1, wobei in der Mitte jeder Nut (9) ein Spalt ausgebildet ist.

10. Das austauschbare Schneidmesser in Verbindung mit dem Erntemesserschutz nach Anspruch 1, wobei jede Kerbe (10) eine Öffnung aufweist, die einem Ende der Nut (9) zugewandt ist.

## Revendications

1. Une lame de coupe commutable associée à un protecteur de couteau de moissonneuse-batteuse, comprenant :
un ensemble de lame de coupe commutable comprenant une plaque d'acier du godet de coupe (1) et plusieurs composants de lame de coupe, chaque composant de lame de coupe comprenant une partie de lame et une partie de montage disposée à l'extrémité arrière de la partie de lame ; chaque partie de montage comprend une rainure (9) ; et
plusieurs cadres inférieurs de lame de coupe disposés sur la plaque d'acier du godet de coupe (1) et étroitement liés entre eux ; chaque cadre inférieur de lame de coupe comprend une partie triangulaire A (8) et un cadre rainuré (6) intégré à la partie triangulaire A (8) ; chaque cadre rainuré (6) et la partie triangulaire A (8) correspondante du cadre inférieur de lame de coupe forment une forme en J ; deux cadres inférieurs de lame de coupe adjacents sont fixés par une traverse (7) ;
**caractérisé en ce que** l'ensemble de lame de coupe commutable et les châssis inférieurs de la lame de coupe sont des pièces distinctes, dans lesquelles, lors de l'assemblage, la rainure (9) de la partie de montage du composant de lame de coupe de l'ensemble de lame de coupe commutable est fixée dans la rainure (6) du châssis inférieur de lame de coupe correspondant, et dans lesquelles les parties de montage des composants de la lame de coupe sont munies d'encoches (10) permettant le nettoyage automatique des obstructions.

2. Lame de coupe commutable associée au protecteur de couteau de la moissonneuse-batteuse selon la revendication 1, dans laquelle chaque partie de montage comprend une face de montage C (5) et des trous traversants (2) formés dans cette face ; les trous traversants (2) sont fixés à la plaque d'acier (1) du godet de coupe par des vis ou des boulons, et une pluralité d'encoches (10), uniformément réparties, est formée à une extrémité de la face de montage C (5), près des rainures (9).

3. Lame de coupe commutable associée au protecteur de couteau de moissonneuse-batteuse selon la revendication 1, dans laquelle chaque rainure (9) et la plaque d'acier du godet de coupe (1) sont fixées par vis ou par soudage.

4. Lame de coupe commutable associée au protecteur de couteau de moissonneuse-batteuse selon la revendication 1, dans laquelle chaque lame présente une structure en V composée de deux lames de coupe triangulaires (4).

5. Lame de coupe commutable associée au protecteur de couteau de moissonneuse-batteuse selon la revendication 3, dans laquelle des dents inclinées sont disposées sur la surface latérale de chaque lame de coupe triangulaire (4) et forment la lame.

6. Lame de coupe commutable associée au protecteur de couteau de moissonneuse-batteuse selon la revendication 1, dans laquelle des plaques de protection (3) sont disposées de part et d'autre de la plaque d'acier du godet de coupe (1).

7. Lame de coupe commutable associée au protecteur de couteau de moissonneuse-batteuse selon la revendication 1, dans laquelle chaque face de montage C (5) et la lame correspondante sont situées sur la même surface horizontale.

8. Lame de coupe commutable associée au protecteur de couteau de moissonneuse-batteuse selon la revendication 1, dans laquelle chaque traverse (7) est fixée par soudage de manière à assurer la liaison entre le cadre de rainure correspondant (6) et la partie triangulaire correspondante A (8), ou est formée par moulage monobloc.

9. Lame de coupe commutable associée au protecteur de couteau de moissonneuse-batteuse selon la revendication 1, dans laquelle un espace est formé au milieu de chaque rainure (9).

10. Lame de coupe commutable associée au protecteur de couteau de moissonneuse-batteuse selon la revendication 1, dans laquelle chaque encoche (10) présente une ouverture orientée vers une extrémité de la rainure (9).
